# EUROPEAN PATENT APPLICATION

(11) **EP 1 574 721 A2**
(43) Date of publication of application: **14.09.2005**
(21) Application number: 05101883.6
(22) Date of filing: 10.03.2005
(51) Int. Cl.: F15B 13/042

(54) **Actuation unit for distribution valves**

(30) Priority: 11.03.2004 IT MO20040054
(71) Applicant: SALAMI S.p.A., I-41100 Modena (IT)
(72) Inventor: Garcea, Rocco, I-40134 Bologna (IT); Giovanardi, Marco, I-41100 Modena (IT)
(74) Representative: Modiano, Guido

(57) **Abstract**

An actuation unit (1) for distribution valves, comprising: a supporting body (2), which is provided internally with a receptacle (3) that is open at one face (2a) of the body and can be associated with a distribution valve; a transmission stem (4), which is accommodated so that it can move along the receptacle and is provided with a first end, which is arranged at the face (2a) and can be associated with the slider of the distribution valve; means (5) for actuating the rotation of a pivot (6) that is supported rotatably within the supporting body and is arranged substantially transversely to the receptacle; and transmission means (7) for the actuation of the stem with an alternating translational motion, which are interposed between the pivot and the stem and comprise a pinion (8), which is rigidly rotationally associated with the pivot (6) at the receptacle (3), and a rack (9), which engages the pinion (8) and is accommodated so that it can slide along the receptacle and is associated with the stem (4).

## Description

The present invention relates to an actuation unit for distribution valves.

It is known that hydraulic circuits use extensively distribution valves that open or close one or more flow paths depending on the various operating requirements of the user.

Substantially, said distribution valves are constituted by an internally hollow valve body, which is provided with a suitable number of connectors and internal cavities and inside which an external actuation produces the sliding of a moving element, known as piston or slider, which is suitable to open certain passages and close others.

The slider is generally cylindrical and is contoured so as to form appropriate perimetric grooves, which open and close the passages formed in the valve body depending on the position assumed by the slider.

There are various embodiments of the actuation units that provide the translational actuation of the slider.

In particular, actuation units of the electromagnetic or electrically-driven type are known.

In the first case, there are appropriately sized electromagnets, which, if energized, apply a retraction or pushing action to the slider; the electric circuit for energizing the electromagnet is activated by means of a control that can be accessed by the operator and is located for example in the cabin of the machine controlled by the distribution valve.

In the second case, instead, an electromagnet provides an actuation pulse, while the action for drawing or pushing the slider is generated by a hydraulic device.

In these cases, generally there is an emergency actuation unit, which is constituted by cam-based or articulated mechanisms, which allow the operator to slide the slider even in the absence of electric power with a stroke that is at least sufficient to return it to the inactive condition.

For example, units are known which are substantially constituted by a stem in which one end can be fixed to the slider of the distribution valve and the opposite end is associated with a slider that can slide within a supporting body and is provided with a slot in which the head of a pivot is engaged, said pivot protruding radially from a shaft that is supported so that it can rotate by said body and can be rotated by means of an actuation lever that can be accessed by an operator.

Further, elastic compression means are provided for the return of the stem and of the slider into the inactive configuration when the actuation lever is released.

The body of the actuation unit is generally provided in two parts, which are mutually coupled hermetically, one part being provided with a blind cavity for accommodating the slider, the other part being provided with a through hole for accommodating the stem, which can be fixed hermetically to the valve body.

These emergency units of the mechanical type are not free from drawbacks, including the fact that the ratio of transmission of the motion to the slider is not linear and changes as the angular position assumed by the actuation lever changes, and that said units generally have a limited structural strength, which limits the possibility of using them in non-emergency conditions.

It is in fact noted that increasingly often, in order to increase the operating flexibility of the equipment or machines to which distribution valves are applied, auxiliary mechanical actuation units are required which are to be used not only in emergency conditions but also during normal operation; however, the limited mechanical strength of known mechanical actuation units penalizes their use in this regard, reducing the level of service offered to customers.

Further, known units sometimes have a rather complicated sealing system, which significantly increases the complexity of their assembly.

The aim of the present invention is to eliminate the drawbacks noted above of the background art, by providing an actuation unit for distribution valves that allows to obtain a linear response in the transmission of motion to the slider of the distribution valve.

Within this aim, an object of the present invention is to provide an actuation unit that has mechanical and structural strength increased with respect to known units, so as to allow its use both as a main actuation system and as an emergency auxiliary actuation system, while having compact dimensions like conventional devices.

Another object of the present invention is to provide an actuation unit that is simple to manufacture and assemble, so as to contain its manufacturing times and costs.

Another object of the present invention is to avoid leakage if the actuation unit operates in an oil bath.

Another object of the present invention is to provide an actuation unit that is simple, relatively easy to provide in practice, safe in use, effective in operation, and has a relatively low cost.

This aim and these and other objects that will become better apparent hereinafter are achieved by the present actuation unit for distribution valves, which comprises: a supporting body, which is provided internally with a receptacle that is open at one face of said body and can be associated with a distribution valve; a transmission stem, which is accommodated so that it can move along said receptacle and is provided with a first end, which is arranged at said face and can be associated with the slider of said distribution valve; means for actuating the rotation of a pivot that is supported rotatably within said supporting body and is arranged substantially transversely to said receptacle; and transmission means for the actuation of said stem with an alternating translational motion, which are interposed between said pivot and said stem; characterized in that said transmission means comprise a pinion, which is rigidly rotationally associated with said pivot at said receptacle, and a rack, which engages said pinion and is accommodated so that it can slide along said receptacle and is associated with said stem.

Further characteristics and advantages of the present invention will become better apparent from the following detailed description of a preferred but not exclusive embodiment of an actuation unit for distribution valves, illustrated by way of non-limiting example in the accompanying drawings, wherein:

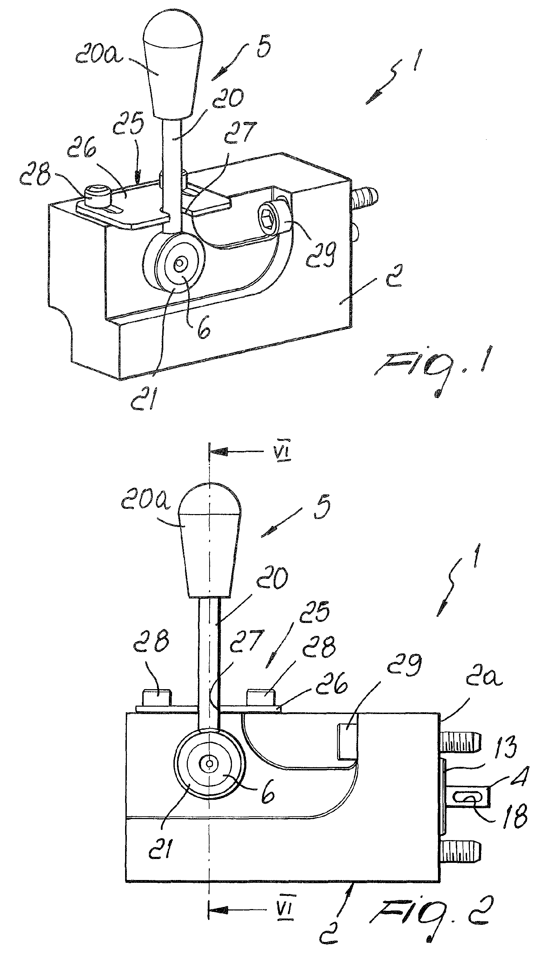

Figure 1 is a perspective view of the actuation unit according to the invention;

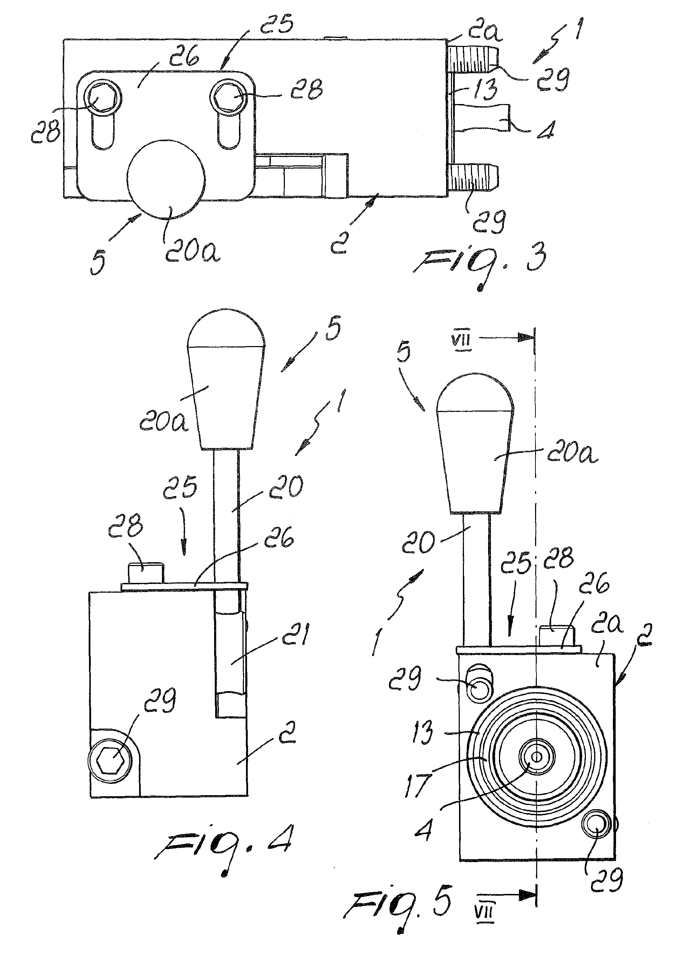

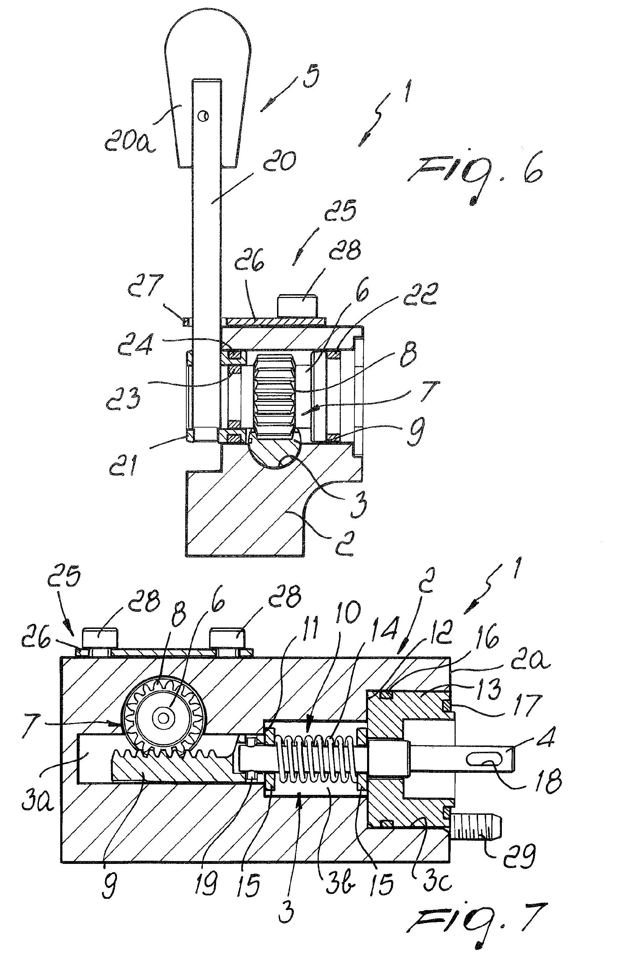

Figures 2 and 3 are respectively a front view and a plan view of the actuation unit of Figure 1;
Figures 4 and 5 are two side views, taken from opposite sides, of the actuation unit of Figure 1;

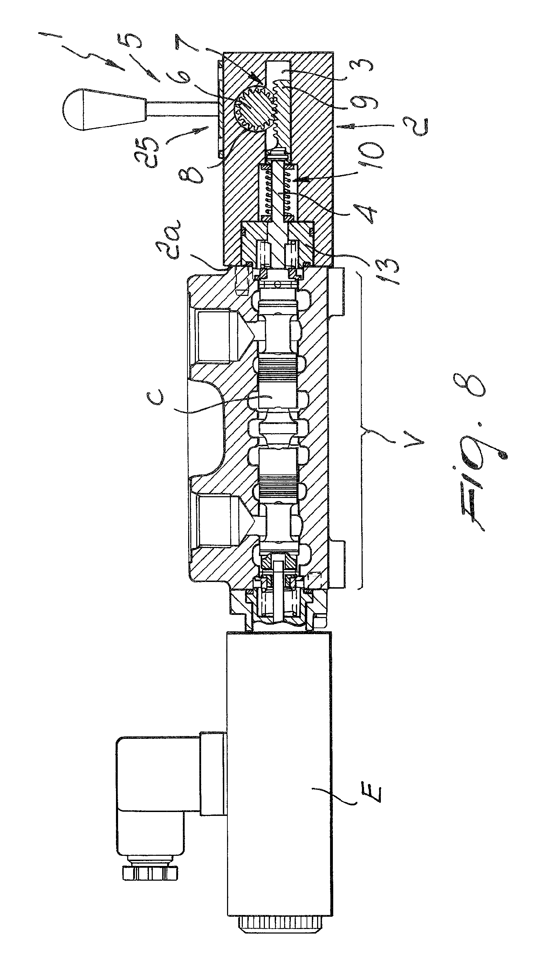

Figure 6 is a sectional view, taken along the line VI-VI of Figure 2;
Figure 7 is a sectional view, taken along the line VII-VII of Figure 5;
Figure 8 is a sectional view of the actuation unit according to the invention in a possible configuration for use.

With reference to the figures, the reference numeral 1 generally designates an actuation unit for distribution valves.

The actuation unit 1 comprises a monolithic supporting body 2, which is provided internally with a receptacle 3, which is open at a face 2a of said body that can be associated with a distribution valve of the conventional type.

The actuation unit 1 further comprises a transmission stem 4, which is accommodated so that it can move along the receptacle 3 and is provided with a first end that is arranged at the face 2a and can be associated with the slider of the distribution valve.

Preferably, the first end of the stem 4 protrudes from the face 2a, so as to be inserted partially within the distribution valve.

There are also means 5 for actuating the rotation of a pivot 6 about its own longitudinal axis, said pivot being supported so that it can rotate within the supporting body 2 and being arranged transversely to the receptacle 3 proximate to its bottom, and transmission means 7 for actuating the stem 4 with an alternating translational motion, which are interposed between the pivot 6 and said stem.

According to the invention, the transmission means 7 comprise a pinion 8, which is rigidly rotationally associated with the pivot 6 at the receptacle 3, and a rack 9, which engages said pinion and is accommodated so that it can slide along said receptacle and is associated with the second end of the stem 4 that lies opposite the first end.

The pinion 8 can be formed monolithically with the pivot 6 or can be keyed on said pivot and rigidly rotationally coupled thereto.

The actuation unit 1 can assume an inactive configuration (Figure 7) that corresponds to the neutral state of the distribution valve with which it is associated.

Conveniently, in this configuration the rack 9 is arranged so that its central portion is engaged with the pinion 8, so as to be able to act on the actuation means 5 so as to actuate a translational motion of said rack in both directions.

Elastic means 10 are preferably provided for returning the stem 4 into the inactive configuration when the user releases the actuation means 5.

In an alternative embodiment, not shown, it is instead possible to provide means for temporarily stopping the rack 9 in the position reached as a consequence of the actuation of the actuation means 5, which lock said rack in this position when the user releases the actuation means 5.

The receptacle 3 is constituted by a dead hole provided with three consecutive portions: a first portion 3a, which is arranged at the bottom of said hole, a second intermediate portion 3b, and a third portion 3c, which is arranged at the face 2a.

The first portion 3a has a smaller transverse cross-section than the second portion 3b, so as to form a first shoulder 11 where said portions are connected.

The rack 9 is accommodated so that it can slide along the first portion 3a.

The third portion 3c has a larger transverse cross-section than the second portion 3b, so as to form a second shoulder 12 where said portions are connected.

The actuation unit 1 comprises a bush 13, which is accommodated at the third portion 3c and is arranged in abutment against the second shoulder 12 and in which the stem 4 is inserted partially so that it can slide.

The elastic means 10 are constituted by a helical compression spring 14, which is interposed between the first shoulder 11 and the bush 13.

Conveniently, a double abutment of the spring 14 is thus formed, and the spring accordingly reacts by returning the rack 9 into the inactive configuration regardless of the direction in which it is made to perform a translational motion along the receptacle 3.

Two pusher rings 15 are further provided which are interposed between the ends of the spring 14 and respectively the first shoulder 11 and the bush 13.

First sealing means are interposed between the bush 13 and the supporting body 2 and are constituted by a first sealing ring 16 or the like, which is inserted in a perimetric slot formed on the lateral surface of said bush.

Second sealing means are further provided which can be interposed between the bush 13 and the distribution valve and comprise a second sealing ring 17, or the like, which is inserted in an annular seat formed on the surface of said bush that is arranged at the face 2a and is suitable to be placed in contact with said valve.

Conveniently, the stem 4 has, at its first end, a longitudinal slot 18 for inserting with play a first pin for fixing to the slider, which is not shown in the figures.

In this manner, when the actuation unit 1 is applied to a distribution valve provided with a main actuation unit, for example of the electromagnetic or electrically-driven type, the slider can be actuated by said unit without moving the stem 4, therefore reducing the drawing or pushing force that must be applied to said slider.

The second end of the stem 4, which lies opposite the first end, is associated with the rack 9 by interposing fixing means, which are constituted by a second pin 19.

Proximate to the stem 4, the rack 9 is contoured so as to form a toothless coupling head, in which the second end of said stem is inserted.

The actuation means 5 are preferably constituted by a lever 20, which has a first end that can be accessed by the user and is provided with a handle 20a and with a second end that lies opposite the first end and is associated with the pivot 6.

Alternative embodiments, not shown, are also possible in which the actuation means 5 have for example a pedal associated with the pivot 6.

The pivot 6 has an end that protrudes laterally from the supporting body 2 and in which the second end of the lever 20 is inserted in a radial direction.

Further, there is a retention bush 21, which is fitted on the protruding end of the pivot 6 and is perforated for the insertion of the lever 20.

In the illustrated embodiment, the lever 20 is threaded at the second end and is screwed into a corresponding threaded hole formed on the pivot 6, while the bush 21 is kept in position by said lever.

Conveniently, the bush 21 allows to balance the hydraulic thrust that acts on the pinion 8 if the actuation unit 1 works in an oil bath.

Third sealing means are provided which comprise a third sealing ring 22 or the like, which is interposed between the pivot 6 and the supporting body 2 and is accommodated in an annular slot that is formed on said pivot at the end that lies opposite the end associated with the bush 21.

There are also fourth sealing means, which comprise a fourth sealing ring 23 or the like, which is interposed between the bush 21 and the pivot 6, and a fifth sealing ring 24 or the like, which is interposed between the bush and the supporting body 2.

The rings 23 and 24 are inserted in respective seats formed in the pivot 6 and in the bush 21.

Conveniently, the actuation unit 1 is provided with means 25 for temporarily locking the lever 20, preferably at the inactive configuration, so as to avoid tampering or accidental actuations of the lever during the operation of the distribution valve to which the actuation unit 1 is applied by means of the optional main actuation unit.

The locking means 25 comprise a plate 26, which is associated detachably with the supporting body 2 and is provided with a notch 27 for the insertion of the lever 20.

The plate 26 is associated with the supporting body 2 by means of threaded elements such as screws 28 or the like.

Accordingly, the actuation assembly 1 can be preassembled and fixed to the body of a distribution valve by means of screws 29 or the like, the supporting body 2 being provided with suitable holes for the insertion of the screws.

Figure 8 is a view of the actuation unit according to the invention, applied with an auxiliary function to a distribution valve V, which is already provided with a main actuation unit E of the electromagnetic type; the first end of the stem 4 is associated with the slider C of said valve on the opposite side of the actuation unit E.

However, the actuation unit 1 can be fitted on a distribution valve that has a main actuation function, in view of the high structural strength and of the precision of the transmission means 7.

Moreover, it is noted that the actuation unit 1 has a rather simple assembly cycle and is likewise easy to apply to existing distribution valves or newly manufactured valves both during manufacture and during maintenance.

The actuation unit 1 can work dry or in an oil bath; in this last case, oil leakage is avoided by an appropriate sealing system (rings 16, 17, 22, 23 and 24), with which the unit is provided.

In practice it has been found that the described invention achieves the intended aim and objects and in particular achieves the aim of providing an actuation unit that allows to obtain a transmission ratio that is constant as the position assumed by the actuation means varies and has such a mechanical and structural strength as to allow its use both as a main unit and as an auxiliary unit.

Moreover, the actuation unit according to the invention is compact, like conventional emergency actuation units, and has low manufacturing costs.

The invention thus conceived is susceptible of numerous modifications and variations all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02004A000054 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An actuation unit for distribution valves, comprising: a supporting body, which is provided internally with a receptacle that is open at one face of said body and can be associated with a distribution valve; a transmission stem, which is accommodated so that it can move along said receptacle and is provided with a first end, which is arranged at said face and can be associated with the slider of said distribution valve; means for actuating the rotation of a pivot that is supported rotatably within said supporting body and is arranged substantially transversely to said receptacle; and transmission means for the actuation of said stem with an alternating translational motion, which are interposed between said pivot and said stem; **characterized in that** said transmission means comprise a pinion, which is rigidly rotationally associated with said pivot at said receptacle, and a rack, which engages said pinion and is accommodated so that it can slide along said receptacle and is associated with said stem.

2. The unit according to claim 1, **characterized in that** it comprises elastic means for the return of said stem to an inactive configuration that corresponds to the neutral state of said distribution valve when the user releases said actuation means.

3. The unit according to one or more of the preceding claims, **characterized in that** said rack, in the inactive configuration, is arranged so that its central portion engages said pinion.

4. The unit according to one or more of the preceding claims, **characterized in that** said pinion and said pivot are mutually integral.

5. The unit according to one or more of the preceding claims, **characterized in that** said pinion is keyed onto said pivot.

6. The unit according to one or more of the preceding claims, **characterized in that** said receptacle comprises a dead hole provided with at least one first and one second consecutive portions, the first portion being arranged at the bottom of said hole and having a substantially smaller transverse cross-section than said second portion so as to form a first shoulder at the region where said portions are connected, the rack being able to slide along the first portion.

7. The unit according to one or more of the preceding claims, **characterized in that** said hole comprises a third portion, which is arranged at said face and has a substantially larger transverse cross-section than said second portion, so as to form a second shoulder at the region where said second and third portions are connected.

8. The unit according to one or more of the preceding claims, **characterized in that** it comprises a bush, which is accommodated at said third portion and is arranged in abutment against said second shoulder, and in which said stem is partially inserted so that it can slide, the elastic means being interposed between the first shoulder and the bush.

9. The unit according to one or more of the preceding claims, **characterized in that** said elastic means comprise at least one helical compression spring.

10. The unit according to one or more of the preceding claims, **characterized in that** it comprises at least one pusher ring, which is interposed between one end of said spring and either said first shoulder or said bush.

11. The unit according to one or more of the preceding claims, **characterized in that** it comprises first sealing means, which are interposed between said bush and said supporting body.

12. The unit according to one or more of the preceding claims, **characterized in that** it comprises second sealing means, which can be interposed between said bush and said distribution valve.

13. The unit according to one or more of the preceding claims, **characterized in that** said stem is provided, at said first end, with a longitudinal slot for the insertion with play of a first pin for fixing to said slider.

14. The unit according to one or more of the preceding claims, **characterized in that** said stem comprises a second end that lies opposite the first end and is associated with said rack by interposing fixing means.

15. The unit according to one or more of the preceding claims, **characterized in that** said fixing means comprise a second pin or the like.

16. The unit according to one or more of the preceding claims, **characterized in that** said actuation means comprise a lever that has a first end that can be accessed by the user and a second end that lies opposite the first end and is associated with said pivot.

17. The unit according to one or more of the preceding claims, **characterized in that** said actuation means comprise a pedal that is associated with said pivot and can be accessed by the user.

18. The unit according to one or more of the preceding claims, **characterized in that** the second end of said lever is inserted in a substantially radial direction within said pivot.

19. The unit according to one or more of the preceding claims, **characterized in that** it comprises a retention bush, which is fitted on said pivot and is perforated for the insertion of said lever.

20. The unit according to one or more of the preceding claims, **characterized in that** it comprises third sealing means interposed between said pivot and said supporting body.

21. The unit according to one or more of the preceding claims, **characterized in that** it comprises fourth sealing means, which are interposed between said bush and said pivot and between said bush and said supporting body.

22. The unit according to one or more of the preceding claims, **characterized in that** said pivot comprises an end that protrudes from said supporting body and at which said lever is inserted and on which said bush is coupled.

23. The unit according to one or more of the preceding claims, **characterized in that** it comprises means for temporarily locking said actuation means.

24. The unit according to one or more of the preceding claims, **characterized in that** said locking means are suitable to keep said actuation means at the inactive configuration.

25. The unit according to one or more of the preceding claims, **characterized in that** said locking means comprise a plate that is detachably associated with said supporting body and is provided with a notch for the insertion of said lever.

26. The unit according to one or more of the preceding claims, **characterized in that** said plate is associated with said supporting body by way of threaded elements.

27. The unit according to one or more of the preceding claims, **characterized in that** at least one of said first, second, third and fourth sealing means comprises a corresponding sealing ring or the like.

28. A distribution valve comprising an actuation unit according to one or more of the preceding claims.
